# EUROPEAN PATENT APPLICATION

(11) **EP 1 387 565 A2**
(43) Date of publication of application: **04.02.2004**
(21) Application number: 03076860.0
(22) Date of filing: 16.06.2003
(51) Int. Cl.: H04N 1/21

(54) **Imaging apparatus having automatic media identification and method therefor**

(30) Priority: 27.06.2002 US 185124
(71) Applicant: EASTMAN KODAK COMPANY, Rochester, New York 14650 (US)
(72) Inventor: Schindler II, Roland R., Eastman Kodak Company, Rochester, New York 14650-2201 (US); Funston, David L., Eastman Kodak Company, Rochester, New York 14650-2201 (US); Cahall, Scott C., Eastman Kodak Company, Rochester, New York 14650-2201 (US)
(74) Representative: Haile, Helen Cynthia

(57) **Abstract**

In one feature of the invention, an imaging apparatus is provided for recording images on a medium, the medium having an exterior surface with information recorded thereon in the form of optically detectable markings. The imaging apparatus has a body having a medium holding chamber for positioning the medium and an electronic image capture system. The electronic image capture system has an imager having an imaging area that converts light incident on the imaging area into an electronic signal and a first optical path forming an image of the scene on at least a portion of the imaging area. A light source provides light in the holding chamber to illuminate the markings. A second optical path has a light entry area positioned in the medium holding chamber to receive light that is reflected by the markings. The second optical path conducts the reflected light from the entry area to an exit area of the second optical path. The exit area is positioned to direct light from the second optical path to form an image of the markings on at least a part of the imaging area. A controller captures an electronic signal representative of the image of the markings. The controller is adapted to analyze the electronic signal to determine the information encoded in the markings.

## Description

This invention relates, in general, to imaging apparatii incorporating at least one electronic image capture system. More specifically, the invention relates to an imaging apparatus that is adapted to record images on a medium disposed in the imaging apparatus.

It is a well established practice in the field of image capture to record a captured representation of a scene onto a medium that is separable from the apparatus that is used to capture the image. One example of such an apparatus is a camera that records images on a separate photosensitive element such as a photographic filmstrip, roll, or plate. Another example of such an apparatus is an electronic camera that captures images and stores the images as electronic signals on a separable medium which may be, for example, a magnetic medium such as an analog video tape, digital video tape and/or magnetic disk, or optical medium such as a Compact Disk, and Digital Video Disk, and/or an electronic medium such as a compact memory card and/or flash memory card.

One problem, however, that exists in the use of an imaging apparatus that record images on separable mediums is the problem of identifying which of a plurality of separable mediums contains a particular image. This challenge becomes particularly difficult to solve where the plurality of mediums store images in a manner that prevents easy viewing of the images stored thereon. This frequently occurs where the images are stored inside a film cartridge or where the images are stored in an electronic form. Thus, what is needed is a method and apparatus that associates images with the recording medium upon which the image is recorded.

Another problem that exists is that the characteristics of the medium itself often dictate the way in which the image is captured, processed, and stored. Thus, it is important that an image capture apparatus that uses separable mediums can determine the characteristics of the medium that will be used to store the images so that the image capture apparatus can adapt the image capture, processing and/or storage functions to conform to the characteristics of the medium.

To solve both of these problems, photographic films and other forms of separable image recording mediums have been developed that contain external markings that can be used to uniquely identify the mediums and to identify the characteristics of the contents of the mediums. For example, in the Advanced Photo System® (APS®), a film cartridge is provided that has external markings comprising a unique film cartridge identification number. This film cartridge identification number is read during film processing and the film cartridge identification number can later be used to identify which roll of APS film a particular image is recorded on. The APS film cartridge also has marking areas which permit a user to manually record markings on the cartridge that can be used to identify the cartridge. Further, the APS film cartridge has markings indicating the type of film stored therein and image storage capacity of the film contained within the cartridge. Similarly, other forms of film such as the 35mm format, are adapted with a housing having an area to receive user markings identifying the contents of the roll and having manufacturer recorded markings thereon indicating the type of film stored therein.

Other forms of image recording mediums such as magnetic, optical and electronic mediums are also adapted with areas that can contain markings that identify the medium and the characteristics of the medium. These areas can comprise areas that are adapted to receive manual or machine recorded markings and areas that have pre-recorded markings such as a bar code.

Various ways are known to convey the information contained in such markings to an imaging apparatus. In some imaging apparatuses, an operator of the imaging apparatus is required to manually enter information contained in the markings. This however, is often inconvenient particularly where the user of the imaging apparatus must rapidly change mediums because of photographic circumstances or for other reasons. Accordingly, automatic methods for conveying medium identification markings are preferred.

A number of proposals have been made to provide an imaging apparatus such as a camera that automatically detects markings on a separable medium used to record images. For example, commonly assigned U.S. Pat. No. 5,845,166 entitled "HYBRID CAMERA WITH IDENTIFICATION MATCHING OF FILM AND ELECTRONIC IMAGE" filed in the name of Fellegara et al., describes one embodiment of a hybrid film electronic camera that has a film cartridge identification sensor. The sensor reads an optically encoded cartridge identification code provided on the film cartridge as the film cartridge is loaded into the camera. The sensor is stationary but positioned at an entry way of a film storage chamber to confront the film cartridge as the film cartridge is inserted into the camera. The bar code is read as the film cartridge is scanned past the sensor during the insertion of the cartridge into the camera.

The '166 patent describes another embodiment wherein a cartridge identification sensor is provided on the main body of the camera in a manner permitting the camera operator to scan a film cartridge over the sensor prior to inserting it into the film chamber. In still another embodiment, the '166 patent describes providing a detachable wand with the cartridge identification sensor located on one end of the wand thereby allowing the camera operator to scan the film cartridge with the wand to enter the cartridge identification data. In each of these useful embodiments, film identification data is obtained from the film cartridge by scanning the cartridge past a stationery scanner or by using a moving scanner to scan a film cartridge.

In a further embodiment of the '166 patent, it is proposed to position the film cartridge in front of the electronic imager of the hybrid camera described therein and to capture an electronic image of the markings on the film cartridge using the electronic imager. The electronic image is then analyzed to determine the information content of the markings. In this embodiment, no scanning is necessary however, it is necessary to essentially take a photograph of the film cartridge to be put into the camera. It will be appreciated this method requires that the film be positioned at a location that is substantially apart from the electronic imager used to capture the image of the film so that all of the markings on the film cartridge can be captured in one image.

U.S. Pat. No. 5,561,284 entitled "APPARATUS AND METHOD FOR READING FILM INFORMATION FOR CARTRIDGE" filed in the name of Kiyonaga et al. also shows an apparatus and method that uses an electronic imager to form an image of one bar code recorded on an APS like film cartridge having information encoded in two separate bar codes. In accordance with the method shown therein, a window is provided that exposes the imager to only one bar code at a time. An actuator is provided that moves the window so that the next bar code can be scanned without interference from the first bar code. It will be appreciated however, that it is difficult to provide such a system for use in an imaging apparatus in that the provision of a separate imager solely for use in reading film information and the use of a moving window adds cost, complexity and size to an imaging apparatus.

In commonly assigned U.S. Pat. No. 5,212,508 entitled "REMOTE PHOTO-ELECTRIC INTERFACE IN CAMERA" filed in the name of Koenig, an apparatus is shown for electrically interfacing a mechanical camera component to an electrical camera component. In this useful apparatus, a mechanical camera component has a sensing area associated therewith. The sensing area contains optically detectable information. The apparatus comprises a device for directing radiant energy to and from the sensing area. Radiant energy is incident on at least a portion of the optically detectable information contained in the sensing area. Detecting devices optically couple to the directing device for photo detecting radiant energy received from the optically detectable information. The detecting device provides an electrical output for receipt by an electrical camera component. The operational status of the mechanical camera component is determinable by the output of the detecting device and the camera is controlled in response thereto. What is shown in the '508 patent among other things, is optically detecting markings on a film cartridge that indicate the type of film recorded in the cartridge. In this useful method and apparatus, a separate photo detector is provided for each piece of optically detected information. Where substantial amounts of information must be obtained, such as where unique cartridge identification numbers are provided in a bar code format, such a system would require a very large number of photo detectors creating increased complexity and integration challenges that must be solved.

It is therefore a general object of the present invention to provide an imaging apparatus for recording images on a separable medium having markings thereon and to obtain information from the markings on the medium while the medium is installed in the imaging apparatus. It is a more specific object of the present invention to provide an imaging apparatus that can obtain information from markings on a medium stored therein that can later by used to identify the medium. It is still another object of the present invention to provide an imaging apparatus that can obtain information that is encoded on a medium stored therein to determine the characteristics of the medium.

In one feature of the invention, an imaging apparatus is provided for recording images on a medium, the medium having an exterior surface with information recorded thereon in the form of optically detectable markings. The imaging apparatus has a body having a medium holding chamber for positioning the medium and an electronic image capture system. The electronic image capture system has an imager having an imaging area that converts light incident on the imaging area into an electronic signal and a first optical path forming an image of the scene on at least a portion of the imaging area. A light source provides light in the holding chamber to illuminate the markings. A second optical path has a light entry area positioned in the medium holding chamber to receive light that is reflected by the markings. The second optical path conducts the reflected light from the entry area to an exit area of the second optical path. The exit area is positioned to direct light from the second optical path to form an image of the markings on at least a part of the imaging area. A controller captures an electronic signal representative of the image of the markings. The controller is adapted to analyze the electronic signal to determine the information encoded in the markings.

In another feature of the present invention an imaging apparatus is provided for recording images on a medium having an exterior surface with information recorded thereon in the form of optically detectable markings. The imaging apparatus has a body with a medium holding chamber for positioning the medium within the imaging apparatus. An electronic image capture system is provided. The electronic image capture system has an imager with an imaging area for converting light incident on the imaging area into an electronic signal and a lens system for focusing light from a photographic scene onto at least a portion of the imaging area. A selectably actuatable light source provides light in the holding chamber to illuminate the location of the markings when the medium is held in the holding chamber. An optical path is provided and is aligned with the markings. The optical path has a light entry area positioned to receive light that is reflected by the markings. The optical path conducts reflected light from the entry area to an exit area of the optical path. The exit area of the optical path is positioned to direct light from the light path to form an image on at least a portion of the imaging area of the imager. A controller actuates the light source and captures an electronic signal from the part of the imaging area of the imager on which the image is formed. The controller is adapted to analyze the electronic signal to determine the information encoded in the markings.

In still another feature of the present invention, these objectives are met by a camera for recording images on film and electronically, the film being housed in a container having an exterior surface with information recorded thereon in the form of optically detectable markings. The camera has a film image capture system for capturing images of a scene on the film. The film is held in a holding chamber which positions the film container so that the film can be used by the film image capture system. An electronic image capture system is also provided. The electronic image capture system has an imager with an imaging area that converts light incident on the imaging area into an electronic signal and a lens system for focusing light from the scene onto at least a portion of the imaging area. A selectably actuatable light source directs light onto the markings. A set of optical fibers each having an entry area for receiving light through which light within a prescribed angular range can be accepted and an exit area for directing received light out of each fiber is provided. Each optical fiber has a pathway for conveying substantially all of the light from each entry area to each exit area. A chamber connector is located in the film holding chamber. The chamber connector distributes the entry areas of the set of optical fibers to confront areas of the exterior surface of the film container having markings thereon. An imaging locator positions the exit area of the set of optical fibers so that light from the exit area is projected onto at least a part of the imager to form an image of the markings on the imager. A controller activates the light source and causes the imager to capture an electronic signal representing the image of the markings. The controller is adapted to analyze the electronic signal and to determine therefrom the information encoded in the markings.

In a further embodiment of the present invention, what is provided is a method of using a scene imager in a camera to determine the information content of markings on a medium contained in a chamber of the camera. In accordance with this method, a light is applied to the medium in an area confronting the markings. An image of the light that is reflected by the markings is extracted from the chamber and conveyed to the imager. An image is formed on the imager that is representative of the markings. The image formed on the imager is converted into an electronic signal. The information content of the markings is determined based upon analysis of the electronic signal.

The invention will be described in greater detail below with reference to the accompanying figures, wherein:
Fig. 1 shows a camera in accordance one embodiment of the present invention with a lens cover in a closed position.
Fig. 2 shows a front view of the camera of Fig. 1 with the lens cover illustrated in an extended position.
Fig. 3 shows a top view of the camera illustrated in Fig. 1.
Fig. 4 shows a side view of the camera illustrated in Fig. 2.
Fig. 5 shows a back view of the camera illustrated in Fig. 1 with the lens cover in a closed position.
Fig. 6 shows a top view of a schematic representation of the camera of Fig. 1 with a film cartridge installed and an optical path comprising a flexible path disposed therein to convey an image of the markings from the holding chamber to the imager.
Fig. 7 shows a schematic representation of the embodiment of Fig. 6 in accordance with the cross-section indicated in Fig. 6 and with a film medium loaded therein.
Fig. 8 shows an enlargement of the embodiment of Fig. 6 in schematic form.
Figs. 9 and 10 diagrammatically show the formation of a spatially coherent image on the imager based upon the use of an optical path that transmits a coherent image from the medium holding chamber to the imager.
Fig. 11 shows a front view of one embodiment of an arrangement of the light path and imager of the present invention with an imaging locator that positions the light path to project an image of markings on a film medium onto an electronic imager in a portion of the image that is also used to record and capture images from a scene.
Fig. 12 shows a side view of the embodiment of Fig. 9 with the light path, imager and electronic optical system of the present invention arranged so light from the light path is projected to form an image of markings on a film medium on an electronic imager in a portion of the imager that is also used to record and capture images from a scene.
Fig. 13 shows a front view of another embodiment of the present invention wherein an imaging locator positions an optical path over a portion of an imager that is not used to capture images from a scene.
Fig. 14 shows a side view of the embodiment of Fig. 11 of with an optical path, imager and electronic optical system of the present invention arranged in a position that is directly over the portion of the imager that is not used to capture images from a scene.
Figs. 15 and 16 show the images formed on an imager where a non-coherent optical path is used to transfer light to the imager.
Fig. 17 shows one embodiment of a film cartridge containing the identification code in a geometric format that is distributed latitudinally about a film cartridge.
Fig. 18 shows an adaptation of a chamber locator and an optical path the present invention adapted to convey an image of the markings from the film cartridge of Fig. 17 to the imager.
Fig. 19 shows a front schematic view of an alternate embodiment of a camera in accordance with the present invention having an optical path that uses mirrors to convey an image of the markings to the imager.
Fig. 20 shows a side schematic view of an alternate embodiment of a camera in accordance with the present invention having a optical path that uses mirrors to convey an image of the markings to the imager.
Fig. 21 shows a top schematic view of an alternate embodiment of a camera in accordance with the present invention having an optical path comprising an arrangement of optical elements to convey an image of the markings to the imager and a flexible optical path conveying an image of the scene to the imager.
Fig. 22 shows a flow diagram of a method in accordance with the present invention.

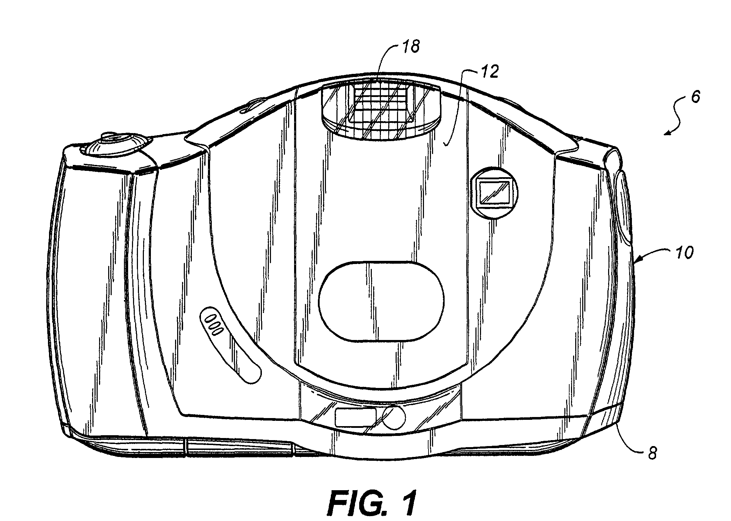

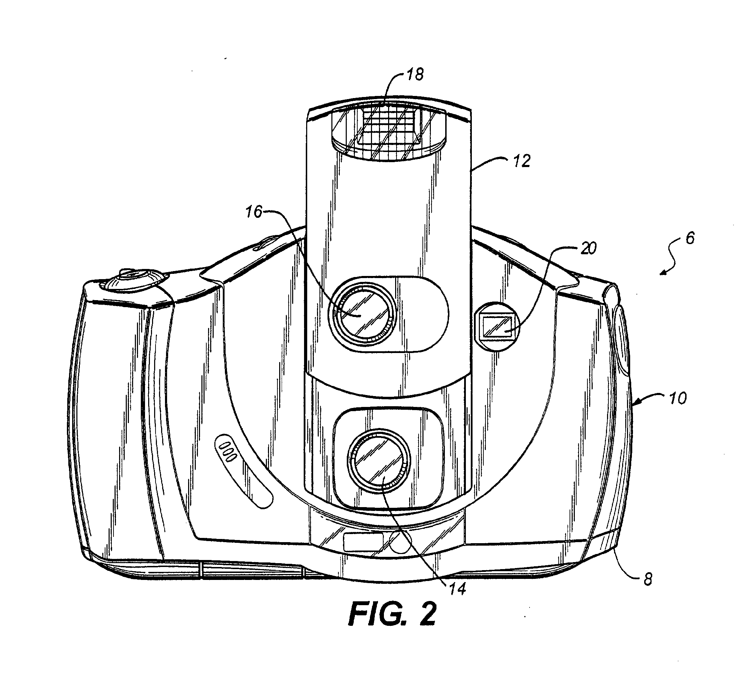

One embodiment of an imaging apparatus 6 in accordance with the present invention is shown in Fig. 1. With this embodiment, imaging apparatus 6 comprises a hybrid camera 8 having a main camera body 10 on which a sliding lens cover 12 is attached. A silver halide optical system 14 and a first optical path 16, are located behind the sliding lens cover 12, and both are exposed to see light when sliding lens cover 12 is extended as illustrated in Fig. 2. An electronic flash unit 18 is preferably located on a top edge of the sliding lens cover 12, such that the extension of the lens cover 12 places electronic the flash unit 18 in a position sufficiently distant from the silver halide optical system 14 and the first optical path 16 to prevent the occurrence of red eye in photographic and digital images captured by the camera. Other flash arrangements can be used including but not limited to flip up flash and offset stationary flash arrangements.

In the illustrated embodiment, a separate optical viewfinder 20 is provided adjacent to lens cover 12. Alternative forms of viewfinders such as those that incorporate or use elements of either the silver halide optical system 14 and/or first optical path 16 may be readily employed. The optical viewfinder 20 includes a masking device, for example, a segmented liquid crystal display (LCD) or mechanical mask that is used to match the images viewed by the camera operator through optical viewfinder 20 to a corresponding image format or aspect ratio selected by the camera operator. In a preferred embodiment, the optical viewfinder 20 provides several different aspect ratios including a full VGA aspect ratio corresponding to an aspect ratio such as 3:4 of the first optical path 16; and high definition television (HDTV) aspect ratio corresponding to the aspect ratio such as 7:4, of the silver halide optical system 14; or such as an HDTV aspect ratio corresponding to a ratio of 16:9; a classic film aspect ratio, such as 10:7; and a panoramic aspect ratio such as 20:7. The HDTV, classic, and panoramic aspect ratios are the same as those used for the Advanced Photo System (APS) cameras introduced in 1996. Other aspect ratios can also be used.

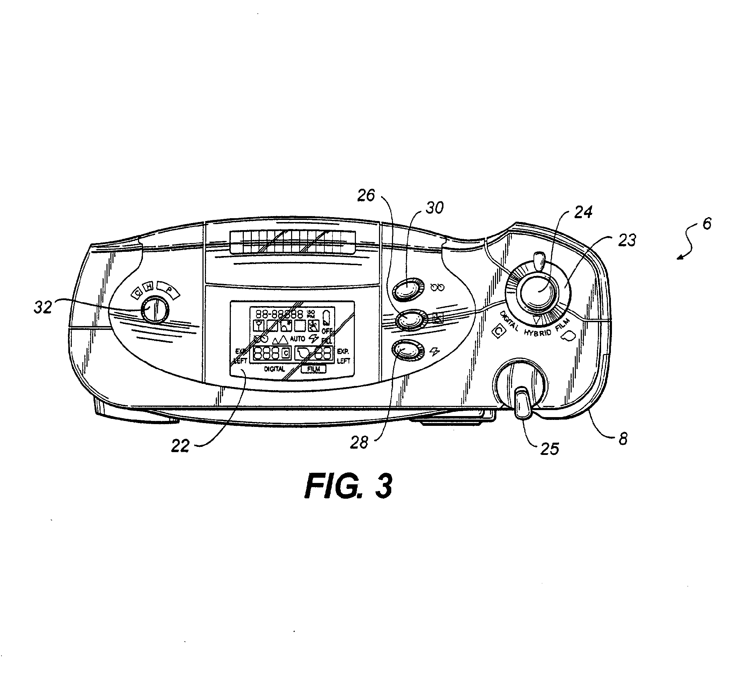

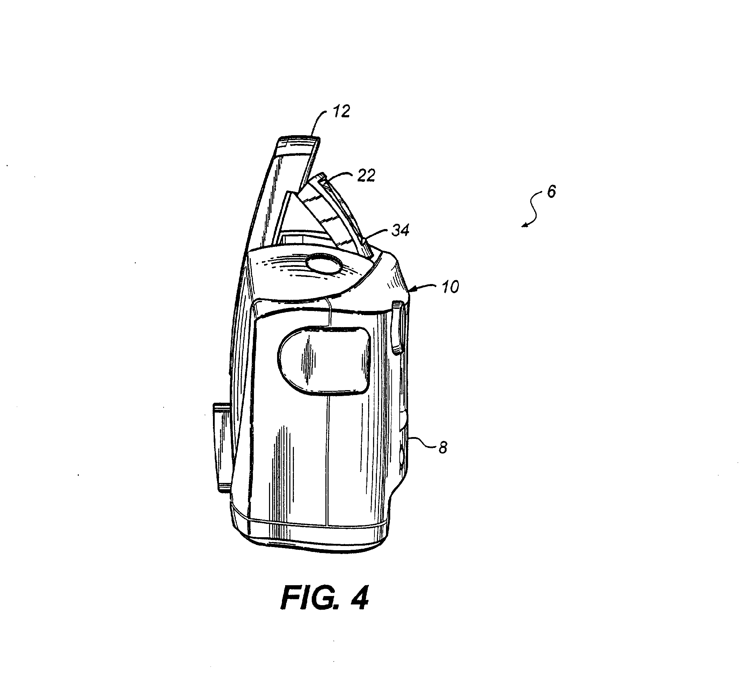

A top view of the camera body 10 is illustrated in Fig. 3. An LCD status unit 22 is provided on top of the camera body 10 to display various camera status data to the camera operator. LCD status unit 22 can be made using any number of display technologies including liquid crystal display technology and organic light emitting display technologies. The location of LCD status unit 22 in not critical. LCD status unit 22 is roughly partitioned into three areas: an area for displaying information specific to film images, an area for displaying information specific to electronically captured images; and a general information area that displays information related to both film images and electronically captured images. In addition to the status unit 22, various operator controls are provided on top of the camera body 10 including an image capture mode selector switch 23, a shutter button 24, a zoom control switch 25, a picture taking mode selector switch 26, a flash mode selector switch 28, a timer mode selector switch 30, and an image format selector switch 32. As illustrated, image capture mode selector switch 23 allows for setting of digital, hybrid or film. However, those skilled in the art will appreciate that many features in the invention would be applicable to cameras where only digital and hybrid modes are provided, or only digital and film or only hybrid and film, or only hybrid modes. In the embodiment shown, the LCD status unit 22 is mounted on hinge support element 34 that is coupled to lens cover 12 such that LCD status unit 22 is tilted toward a camera operator when the lens cover 12 is extended during image capture operation as shown in Fig. 4. LCD status unit 22 can be located in other areas of camera body 10.

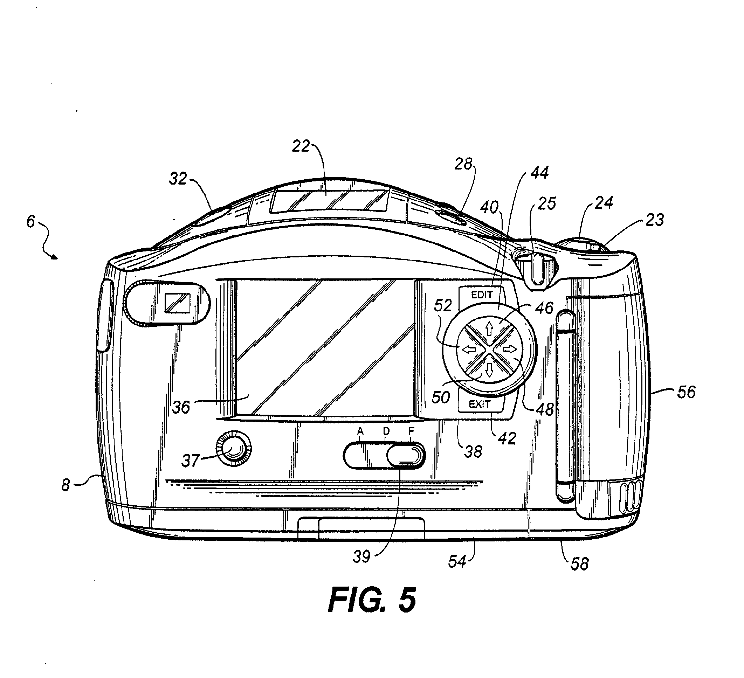

A color main screen display unit 36 is provided on the back of main camera body 10 is illustrated in Fig. 5 and is preferably recessed from the back surface of the main camera body 10 for protection. Color main screen display unit 36 can comprise any of a number of display technologies including LCD and Organic Light Emitting Diode displays. A main screen operator control unit 38 is provided adjacent to the color main screen display unit 36 and includes an edit switch 40, an exit switch 42 and a directional switch unit 44. Directional switch unit 44 is preferably a four directional thumb pad segmented into four different individual directional switches including an up directional switch 46, a down directional switch 50, a right directional switch 48 and a left directional switch 52. It will be understood, however, that other types of directional switch units, for example, track balls, pressure pads, etc., can be readily employed to enter directional signals. The main screen operator control unit 38 is utilized in conjunction with elements of graphical user interfaces displayed in the color main screen display unit 36 to control various camera functions that will be described in greater detail below.

As illustrated in Fig. 5, the main camera body 10 is also provided with a memory card door 54, a battery compartment door 56 and a film chamber door 58. The memory card door 54 is provided to protect memory card interface 92 located in the main camera body 10. The battery compartment door 56 and film chamber door 58 are provided in the bottom of the main camera body 10 in a conventional manner to provide access to an internal chamber film cartridge holding chamber 64 and a battery compartment (not shown).

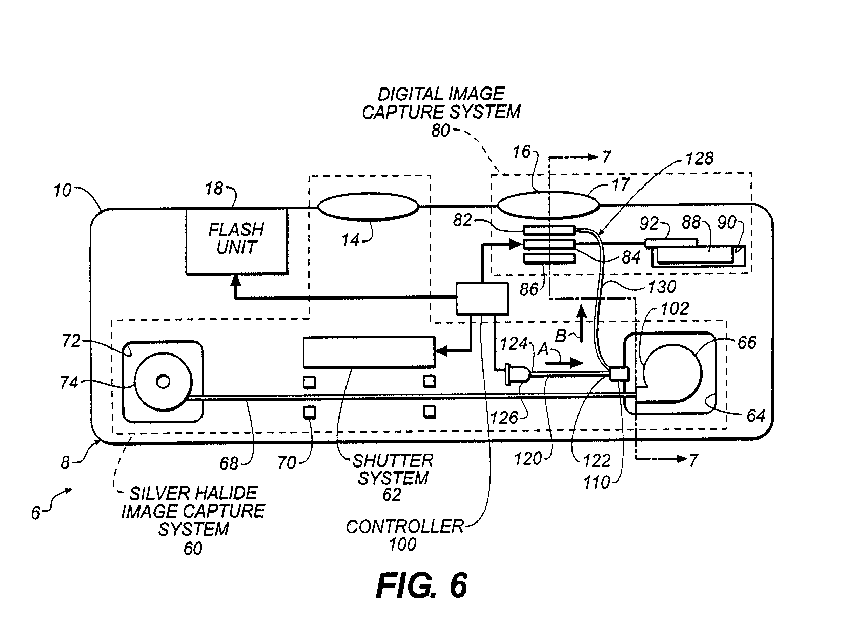

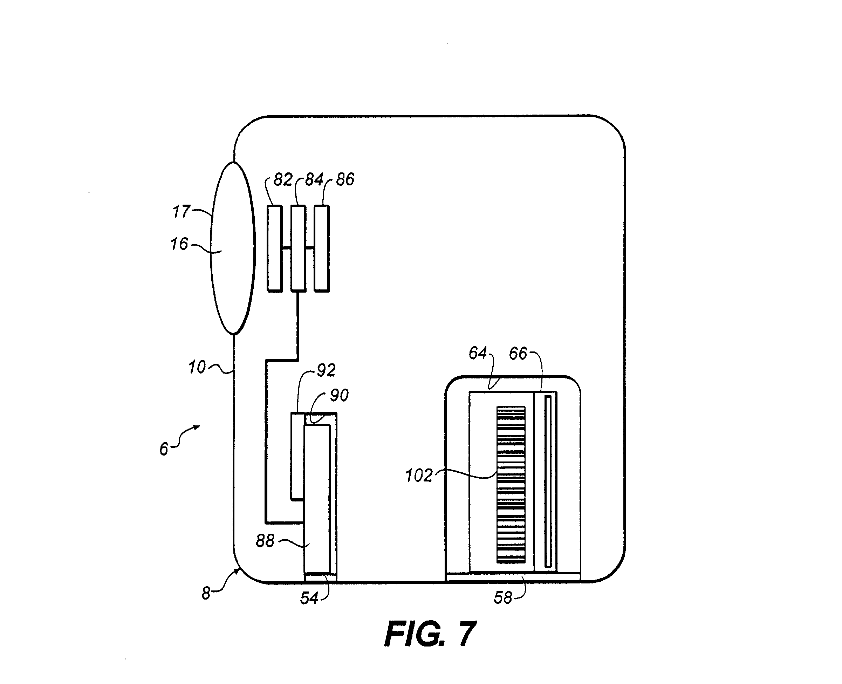

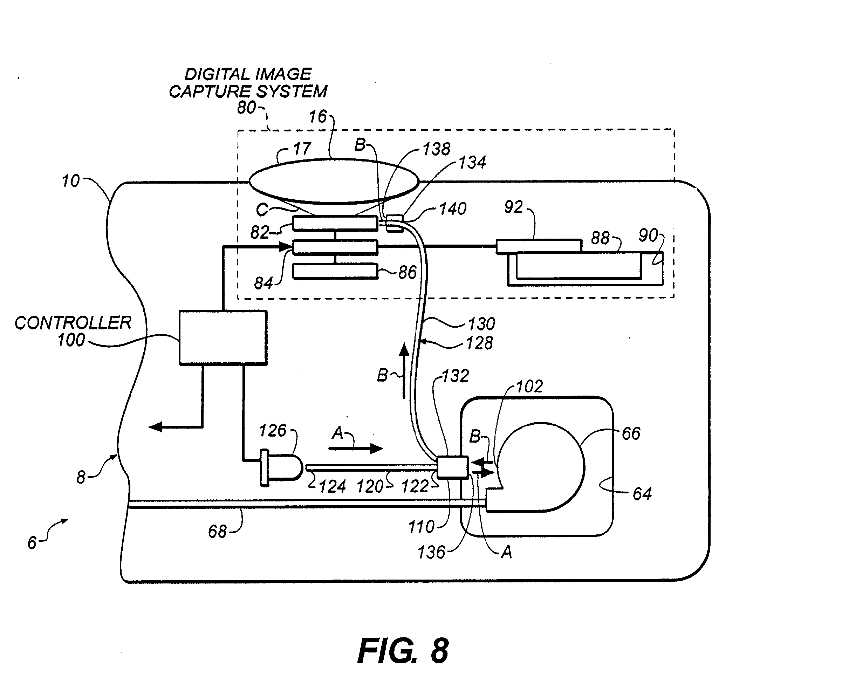

The operation of camera 8 will now be described with reference to Figs. 6, 7 and 8. Fig. 6 shows the overall system architecture of camera 8. While Fig. 7 shows a schematic representation of the embodiment of Fig. 6 in accordance with the cross-section indicated in Fig. 6. Fig. 8 shows a partial enlargement of the embodiment of Fig. 6 in schematic form. The basic system components of the system architecture include a silver halide image capture system 60, a digital image capture system 80, and a controller 100. As is shown in Fig. 6, silver halide image capture system 60 includes silver halide optical system 14, a shutter system 62, film cartridge holding chamber 64, which is adapted to hold a film cartridge 66. A conventional film drive (not shown) advances photographic film 68 from a film cartridge 66 located in film cartridge holding chamber 64 through a film gate 70 and into a winding chamber 72. Photographic film 68 is wound about winding spool 74 located in winding chamber 72. The film drive (not shown) also works in reverse in a conventional manner to rewind exposed photographic film 68 from winding spool 74 back into the film cartridge 66 located in film cartridge holding chamber 64.

Digital image capture system 80 comprises first optical path 16, imager 82, image processor 84 and memory 86. In the embodiment shown, first optical path 16 comprises an arrangement of lens elements 17. An optional separable medium 88 such as a memory card is provided and stored in medium holding chamber 90. An interface 92 engages separable medium 88 disposed in medium holding chamber 90.

A controller 100 is provided to control the operation of electronic flash unit 18, silver halide image capture system 60 and digital image capture system 80. Controller 100 receives input from image capture mode selector switch 23, shutter button 24, zoom control switch 25, picture taking mode selector switch 26, flash mode selector switch 28, timer mode selector switch 30 and image format selector switch 32. Based upon the condition of these inputs, controller 100 selects a mode of operation, determines whether to capture an image using the silver halide image capture system 60, the digital image capture system 80, or both and then executes an image capture sequence in accordance with a selected mode and in a time period defined in relation to the depression of the shutter button 24. Controller 100 can be used to control other components of the camera. Controller 100 can be provided in the form of a microprocessor or microcontroller. Controller 100 can be centrally located or can be provided as multiple components of equivalent function in distributed locations within camera body 10.

When controller 100 is instructed to capture an image using silver halide image capture system 60, controller 100 operates shutter system 62 to permit light from a scene to pass through silver halide optical system 14 and strike photographic film 68 to form an image thereon. Following a suitable exposure period, shutter system 62 is again closed and controller 100 causes the film drive to advance photographic film 68 by one frame provided there is sufficient photographic film 68 in film cartridge 66 to permit this or unless otherwise instructed. Silver halide optical system 14 is variably focusable. Controller 100 can control the movement of silver halide optical system 14 in order to focus silver halide optical system 14. In this regard, the camera of Fig. 1 can be adapted with a conventional optical or sonic range finder (not shown) to identify distance from the camera to the subject in order to select an appropriate focus distance and further adapted to cause silver halide optical system 14 to move to the appropriate focus position prior to the initiation of an image capture sequence.

During a digital image capture sequence, controller 100 transmits a signal to image processor 84 of digital image capture system 80 and causes image processor 84 to drive imager 82 to capture an electronic representation of the image formed on imager 82 by light passing through first optical path 16. In the embodiment shown, first optical path 16 has a combination of optical elements 17 such as an arrangement of one or more refractive elements, diffractive elements and/or reflective elements or any combination thereof focus light from the scene onto imager 82. First optical path 16 can be fixed focus or variably focused.

Imager 82 is configured so as to capture, for each image capture event, one or more electronic signals representing the image formed on a light sensitive area of imager 82. The type of imager 82 used may vary. However, it is highly preferred that imager 82 is one of several solid state imagers available. One highly popular type of solid-state imager commonly used is a charge coupled device (CCD). Several possible CCD types are available. The first of these, the frame transfer CCD allows charge generation due to photo activity and then shifts all of the image charge into a light shielded common non-photo sensitive area. This area is then clocked out to provide a sampled electronic image. The second type, the intraline transfer CCD, also performs shuttering by shifting the charge that shifts the charge to an area above or below each image line so that there are as many storage areas as there are imaging lines. The storage lines are then shifted out in an appropriate manner. Each of the CCD images has both advantages and disadvantages. However, all will work in this application. Image processor 84 has separate components that actuate the CCD so as to drive an image from the CCD. It is also possible to use an electronic imager 82 manufactured with CMOS technology. This type of imager is attractive for use, since it is manufactured easily by readily available solid-state processes. In addition, the processing used to form CMOS imagers allow peripheral circuitry to be integrated onto the same semi-conductor die. For example, a CMOS sensor can include clock drivers and other circuitry necessary to obtain image information from the CCD. An electronic imager 82 comprising a charge injection device can also be used. The charge injection device differs from the others mentioned above in that the charge is not shifted out of the device to be read. Reading is accomplished by shifting charge within the pixel. This allows a non-destructive read of any pixel in the array. If the device is externally shuttered, then the array can be read repeatedly without destroying the image. Shuttering can be accomplished by an external shutter or without an internal shutter, by injecting the charge into the substrate for recombination. Preferably, the digital image capture system 80 captures a three color image. It is highly preferred that imager 82 comprises a single imager having a three or four color filter. However, multiple monochromatic imagers and filters can be used. Suitable three-color filters are well known to those of skill in the art and are normally incorporated with the imager to provide an integral component.

The electronic representation of the image that is captured by imager 82 is processed by image processor 84 to form an electronic signal, typically a digital signal, which can then be conveniently stored in an internal memory 86. The electronic signal representing the image can also be recorded in a separable medium 88. In the embodiment of Fig. 6, separable medium 88 comprises a digital memory card such as a compact flash card, which is stored in a medium holding chamber 90. Image processor 84 communicates the signal representing the image to the separable medium 88 by way of interface 92. Separable medium 88 can take the form of an electronic memory as described, or any other form of electronic, magnetic, or optical mediums that can receive and store an electronic signal representing an image. Interface 92 is adapted to store and/or optionally retrieve data from separable medium 88. Controller 100 can optionally be used to perform the functions of image processor 84.

As is shown in Figs. 6, 7, and 8 film cartridge holding chamber 64 incorporates a chamber connector 110. In the embodiment of Figs. 6, 7, and 8 chamber connector 110 receives a plurality of optical fibers 120 and positions one end of each of these fibers approximate to the area of the film cartridge 66 having external markings. The plurality of optical fibers 120 have an exit area 122 positioned by chamber connector 110 proximate to the markings 102 on film cartridge 66. Optical fibers 120 have a light entry area 124 that is positioned to receive light from a light source 126. Light source 126 can be an electric light bulb, light emitting diode or other electrically powered light emitting structure that provides light A. Other light sources can be used, as long as they provide sufficient light. For example, ambient light can be optically captured and directed to illuminate markings 102. The flow of light A to markings 102 can be selectively disabled by controller 100. For example, controller 100 can prevent electrical power from flowing to a light source 126 comprising a light emitting diode. Similarly, a conventional shutter arrangement can be provided to selectively block ambient light from reaching markings 102. The shutter arrangement can be manually operated or operated by controller 100. Light A enters optical fibers 120 through entry area 124 and passes through the plurality of optical fibers 120 and emerges from exit area 122. Light A illuminates the area of film cartridge 66 containing the markings 102.

A second optical path 128 is used to convey an image of the markings to imager 82. Second optical path 128 can take many forms, including but not limited to a light pipe bundle comprising for example, an array of individual light pipes or an array of individual waveguides, an arrangement of one or more reflective elements, an arrangement of one or more refractive elements, or an arrangement of one or more diffractive elements or some combination thereof.

In the embodiment shown in Figs. 6, 7 and 8, second optical path 128 comprises a set of optical fibers 130 such as a bundle of optical fibers, an array of liquid light pipes, or an array of hollow light pipes that use either reflection or total internal reflection to convey light from one end of each fiber to another end of each fiber. The set of optical fibers 130 is joined to chamber connector 110. Each optical fiber in the set of optical fibers 130 has a light entry area 132 and a light exit area 134. The arrangement of entry areas 132 of the set of optical fibers 130 creates an entry face 136 for second optical path 128 and the arrangement of exit areas 134 creates an exit face 138 for second optical path 128. In the embodiment shown, each one of the light entry areas 132 is positioned by chamber connector 110 over an area confronting the markings 102 and the distribution of light entry areas 132 within entry face 136 is defined so as to provide uniform coverage of the area containing markings 102. However other distributions can be used. Light that is reflected from markings 102, passes into entry areas 132 with an intensity that varies in accordance with the amount of light that is reflected or absorbed by markings 102.

The density of light entry areas 132 at entry face 136 is sufficient to distinctly capture picture elements from the area of film cartridge 66 having markings 102 to permit an image of markings 102 to be formed on the imager 82 with sufficient clarity as to permit the information in the markings to be recovered from the image. Further, the distribution of and location of entry areas 132 is defined so as to provide some minimal degree of redundancy so that the failure of one single fiber in the set of optical fibers 130 will not impair the ability of the set of optical fibers 130 to form a meaningful image of markings 102 on imager 82. The reflected light entering the entry areas 132 of the set of optical fibers 130 is indicated by reference character B in Fig. 8. This reflected light B travels through the set of optical fibers 130 until it reaches exit areas 134. In the embodiment shown, imaging connector 140 targets each of the exit areas 134 so that the light emerging from exit areas 134 strikes imager 82 in an area in which imager 82 is photo sensitive.

In this embodiment, second optical path 128 is a spatially coherent optical path in that there is a precise relationship between the image received at entry face 136 and the image formed by the light exiting from exit face 138. In this embodiment, second optical path 128 is made coherent by using a coherent set of optical fibers 130. In a coherent set of optical fibers 130, the entry area 132 of each of the optical fibers is arranged at entry face 136 in a pattern. Each exit area 134 of the set of optical fibers 130 is arranged at exit face 138 so that there is a known spatial relationship between the pattern of entry areas 132 at entry face 136 and the pattern of exit areas 134 at exit face 138.

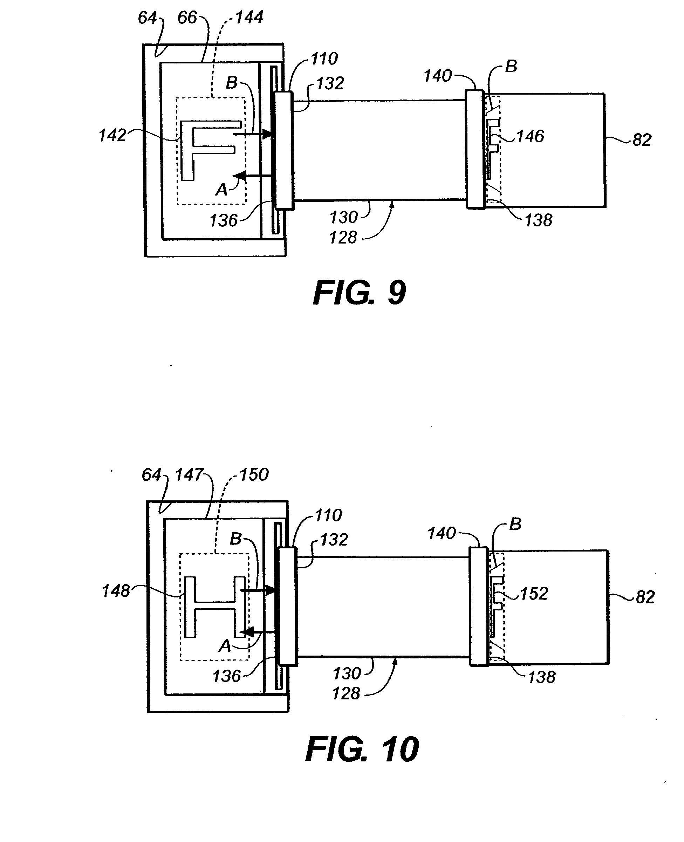

Fig. 9 shows the effect of using a coherent second optical path 128. As is shown in Fig. 9, second optical path 128 is has an entry face 136 positioned in film cartridge holding chamber 64 having a film cartridge 66 disposed therein. Film cartridge 66 has a first set of markings 142 thereon within a first marking area 144. Light A is transmitted onto first marking area 144 and a portion of light A is reflected. Entry face 136 of second optical path 128 receives any reflected light B that enters entry face 136 from a cone of acceptance defined as a projected space in front of the entry face 136 within which light that enters entry face 136 can propagate through second optical path 128. Reflected light B is transferred by second optical path 128 and exits second optical path 128 at exit face 138. Because second optical path 128 provides a precise relationship between the image entering entry face 136 and the image exiting exit face 138, an output image 146 having an appearance that generally conforms to the appearance of first set of markings 142 in first marking area 144 is formed on imager 82. Fig. 10 shows the effect of using second optical path 128 to convey light reflected by a second film cartridge 147 having a second set of markings 148 in a second marking area 150. As can be seen in Fig. 10, the image 152 formed on imager 82 has an appearance that generally conforms to the appearance of second set of markings 148 in second marking area 150. As can also be seen in Fig. 10, the aspect ratio, scale, or orientation of the image at entry face 136 and the aspect ratio of the image formed by exit face 138 can differ, so long as the imaging information contained within the image 152 has an appearance that is not distorted to prevent the interpretation of markings 102.

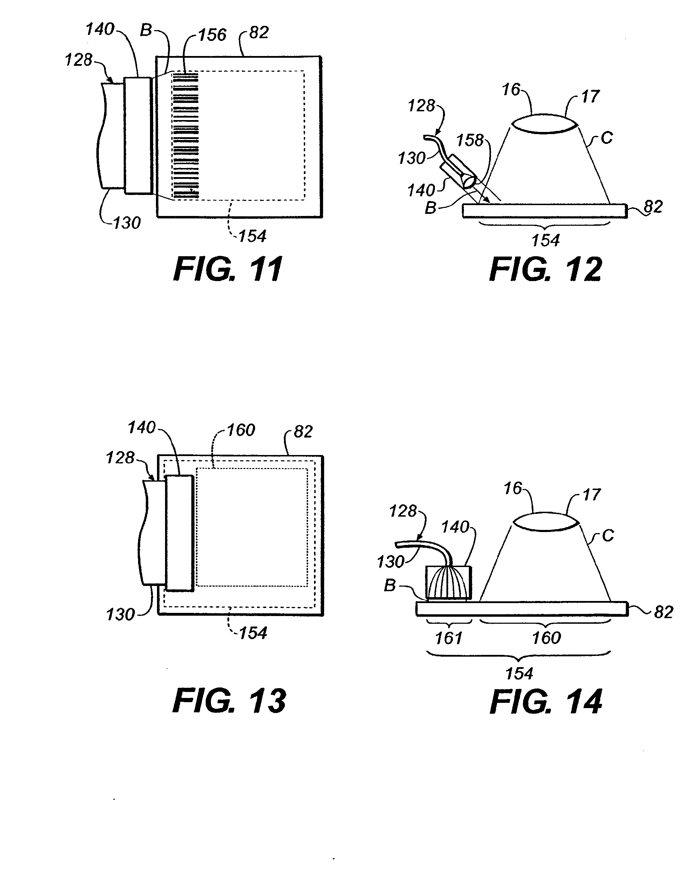

Figs. 11 and 12 show detail regarding one embodiment of the optical interface between imager 82 and second optical path 128. In Figs. 11 and 12, imager 82 is capable of capturing images that are projected onto an image capture area 154 and, accordingly, first optical path 16 is adapted to project light C from the scene to form an image in image capture area 154. Typically first optical path 16 will be adapted to maximize the portion of image capture area 154 on to which light C from the scene is projected. This maximizes the image resolution of the captured image formed by light C. Where this is done, reflected light B that exits from exit face 138 of second optical path 128 also uses a portion of image capture area 154 in forming image 156. Accordingly, it is useful to ensure that imager 82 does not attempt to capture images of scenes when image 156 is being projected onto image capture area 154. This can be accomplished by disabling the source of light A whenever an the initiation of an image capture sequence is initiated, by preventing scene image capture whenever image 156 is being formed on imager 82 or by using other electrical, optical and/or mechanical techniques to prevent reflected light B from striking imager 82 during scene image capture. Alternatively, a combination image can be captured that contains both an image 156 representing the markings and an image representing the scene. The combination image can be stored or further processed to remove or modify the appearance of image 156 in the combination image.

It is also useful to ensure that second optical path 128 and imaging connector 140 are not positioned to interfere with the flow of light C, from digital optical system 14 onto imager 82 during image capture. Accordingly, in the embodiment or Figs. 11 and 12, imaging connector 140 is positioned outside the path of light from the scene C. Thus, in this embodiment, reflected light B is projected from second optical path 128 onto the image capture area 154 to form a coherent reflected light image 156 in the image capture area 154 of imager 82. To ensure that image 156 is not blurred, a lens system 158 can be provided which focuses the light from exit face 138 onto the image capture area 154.

Figs. 13 and 14 show an alternative embodiment that can be used in circumstances where the imager 82 has an image capture area 154 that is larger than a scene image capture area 160 that represents the maximum portion of the image capture area 154 upon which first optical path 16 forms an image based on light from the scene C. In this embodiment, the image capture area 154, is portioned into a marking image capture area 161 and a scene image capture area 160. Imaging connector 140, positions exit face 138 of second optical path 128 so that light from exit face 138 confronts the image capture area of imager 82 directly or with minor separation. This forms a reflected light image 163 on marking image capture area 161. To the extent that exit face 138 is positioned proximate to the image capture area, the need for lens system 158 is reduced. An advantage of this embodiment is that imaging connector 140 can comprise an adhesive that adheres exit face 138 of second optical path 128 to the imager 82. The adhesive embodiment of imaging connector 140 can hold the exit face 138 directly against the imager 82 or can allow some separation. Where separation is allowed, it is preferred that such an adhesive is transparent.

Under certain circumstances, it may be difficult or prohibitively expensive to provide a second optical path 128 that is spatially coherent. Accordingly, in another embodiment of the present invention, second optical path 128 is arranged in a manner that does not provide a precise relationship between the image received at the entry face 136 and the image that exits exit face 138. An example of such a second optical path 128 is a plurality of optical fibers 130 in which the precise relationship of each of the optical fibers in the set of optical fibers 130 is not maintained so that the arrangement of optical fibers ends in chamber connector 110 matches the arrangement of optical fibers at the imaging connector 140.

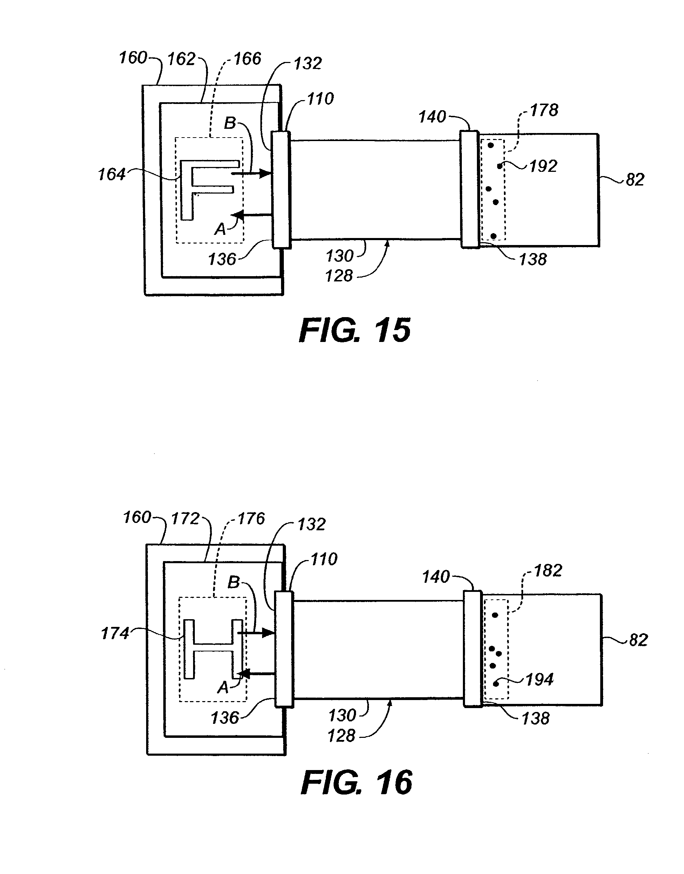

Two examples of this are shown in Figs. 15 and 16. Fig. 15, shows a first set of markings 164 on a first electronic medium 162 such as a compact flash card. First electronic medium 162 is positioned so that the first set of markings 164 confront entry face 136 of second optical path 128. Light from a source (not shown) reflects from the first set of markings and the reflected light enters entry face 136 of second optical path 128. However, the image 178 that is formed on imager 82 is comprised of a pattern of image elements 192 that do not have an appearance that matches the appearance of markings 164 on first electronic medium 162. Similarly, as is shown in Fig. 16, where a second electronic medium 172 having a second set of markings 174 is positioned into scene image capture area 160, light reflected from second marking area 176 passes through the set of optical fibers 130 form an image 182 on imager 82 comprising a different pattern of image elements 194 forming a non-coherent image of second set of markings 174. In this embodiment, although a coherent image is not formed on imager 82, each pattern of markings, e.g. 164 or 174, within the marking area 166 forms a unique pattern of image elements, e.g. 192 and 194, on imager 82. Thus, in this embodiment, it becomes possible to develop an association between a pattern of image elements formed on an imager by a non-coherent second optical path 128, and the pattern of light entering entry face 138. In application, the association can be developed by using a calibration process to compare the pattern of image elements formed on imager 82 to a set of calibration markings or by selectively applying a light source to the entry area 132 of each of the set of optical fibers and observing which portions of the imager 82 become illuminated. Where this is done, an associating look up table can be assembled from which the information that is recorded in the markings based can be determined upon which elements of imager 82 are illuminated. Alternatively, image processor 84 can be adapted so that it assembles a pattern of non-coherent image elements formed on imager 82 into a digital representation of a coherent image that accurately represents the markings on the medium. Using this digital representation, the information contained in the markings can be determined.

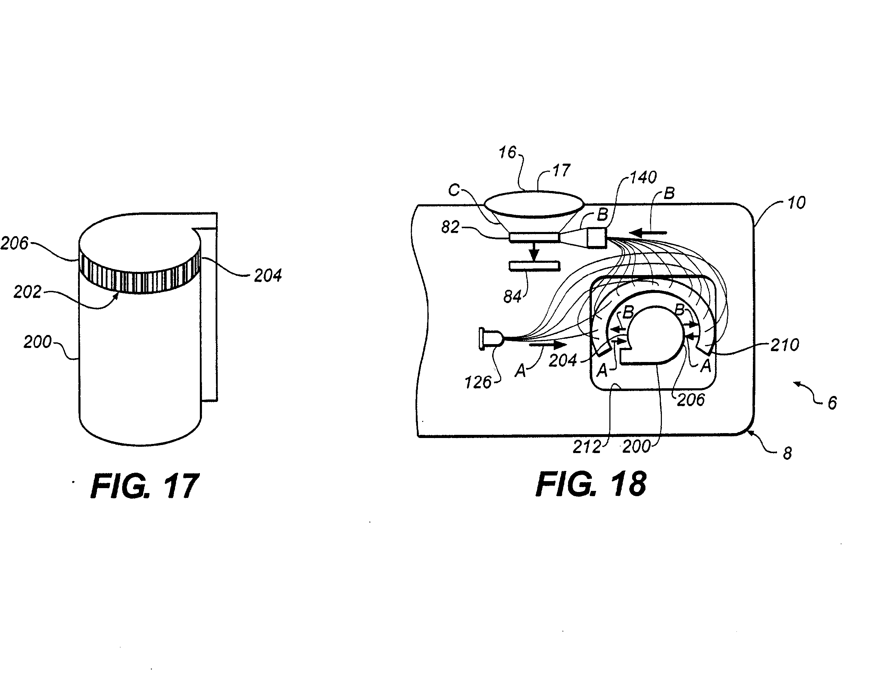

Fig. 17 shows an alternative arrangement of markings on a film cartridge 200. In this arrangement, film cartridge 200 has a bar code 202 that begins at a bar code start position 204 and extends to a bar code end position 206. When film cartridge 200 is inserted into the camera of Fig. 18, a chamber connector 210 is provided in the chamber 212. It will be appreciated from Fig. 18 that in this embodiment, chamber connector 210 distributes particular ones of the set of optical fibers 130 in a pattern that matches the pattern of bar codes 202 and extends from the bar code start position 204 to the bar code end position 206. It will further be appreciated that using the methods of the present invention, a chamber connector 210 can be defined to match any anticipated pattern of bar codes 202 or any other pattern of markings.

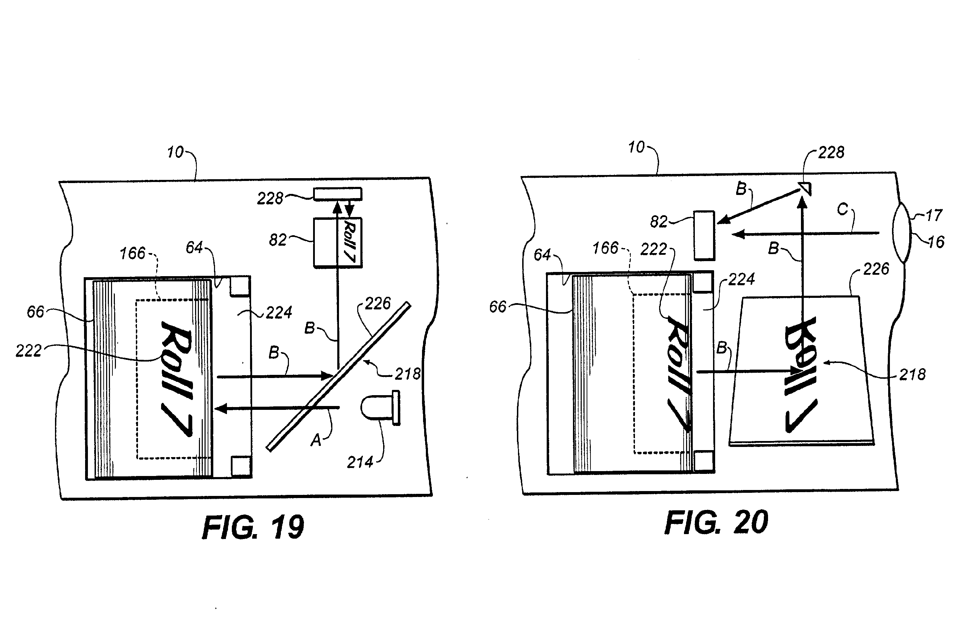

Figs. 19 and 20 show respectively, another embodiment of the present invention. In this embodiment, a second optical path 218 comprises an arrangement of reflective surfaces such as mirrors. As is shown in Fig. 19, a film cartridge 66 is positioned in film cartridge holding chamber 64. However, in this embodiment, imaging gate 224 is provided in holding chamber 64. Film cartridge 66 has a pattern of markings 222 in a marking area 166. Light A is supplied to marking area 166. In the embodiment shown in Fig. 19 this light is provided by a light source 214. As is shown in Fig. 19, light source 214 is positioned behind a mirror 226. Mirror 226 is half silvered allowing source light A to pass through mirror 226 and radiate on to pass through half silvered mirror 226 and through imaging gate 224 to strike marking area 222. In this embodiment, marking area 166 has text markings 222 enclosed. Reflected light B from marking area 166 returns to half silvered mirror 226 and is reflected to redirecting mirror 228. Redirecting mirror 228 deflects the reflected light B from mirror 226 to form an image on imager 82. Where necessary, either mirror 226 or redirecting mirror 228 can have a curved surface to optically focus the image from marking area 166 onto imager 82. Alternatively, refractive or diffractive optical elements can be incorporated to modify reflected light B to enhance the focus of the image formed by light B by imager 82.

The markings on a medium container may take the form of handwriting or machine written symbols, only one example of which is shown in Figs. 19 and 20. Further, the information that is obtained from a medium can take the form of metadata that is to be associated with an image in the form of data or, a separate image that itself is meant to be associated with each captured image to facilitate identifying the storage medium upon which the image is recorded. While various embodiments described above have described the use of an optical path to detect markings on a film cartridge, such techniques are equally applicable for use in detecting markings that are optically encoded on other forms of media, such as separable medium 88. Further, such systems can be incorporated in an imaging apparatus 6 such as a digital camera, kiosk, personal computer or other device having a scene imager and a separable image storage medium.

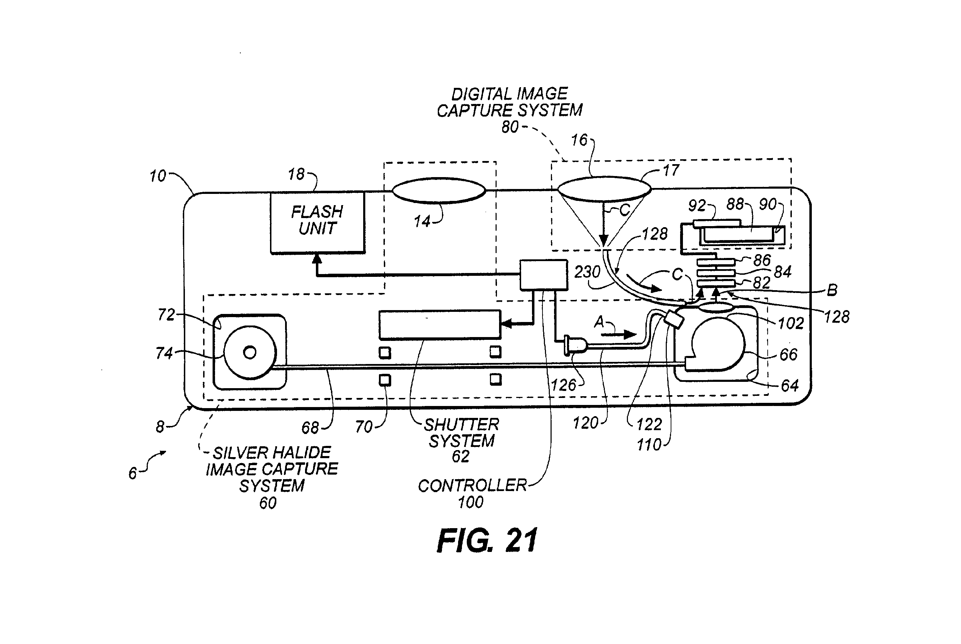

In the embodiments shown above, imager 82 has been shown as receiving light C from a scene from a first optical path 16 that comprises a combination of optical elements 17 while light B reflected by markings on a separable medium has been shown as being conveyed to imager 82 by way of second optical path 128. It will be appreciated that, in certain embodiments, camera geometry or other factors may make it useful to reverse this arrangement. For example, in the embodiment shown in Fig. 21, imager 82 is directed toward markings 102 and captures a reflected light image of markings 102 by way of a second optical path 128 comprising an arrangement of refractive lens elements that focuses reflected light B from markings 102 onto imager 82. Alternatively, in this embodiment, second optical path 128 can comprise an arrangement of diffractive lens elements. First optical path 16 comprises a set of optical fibers 230 such as are described above. This allows imager 82 to be used to capture both an image of the markings and images of the scene. It will be appreciated that first optical path 16 can provide light from the scene to imager 82 using any of the other described and claimed embodiments of second optical path 128 such as, for example, an arrangement of reflective surfaces such as mirrors.

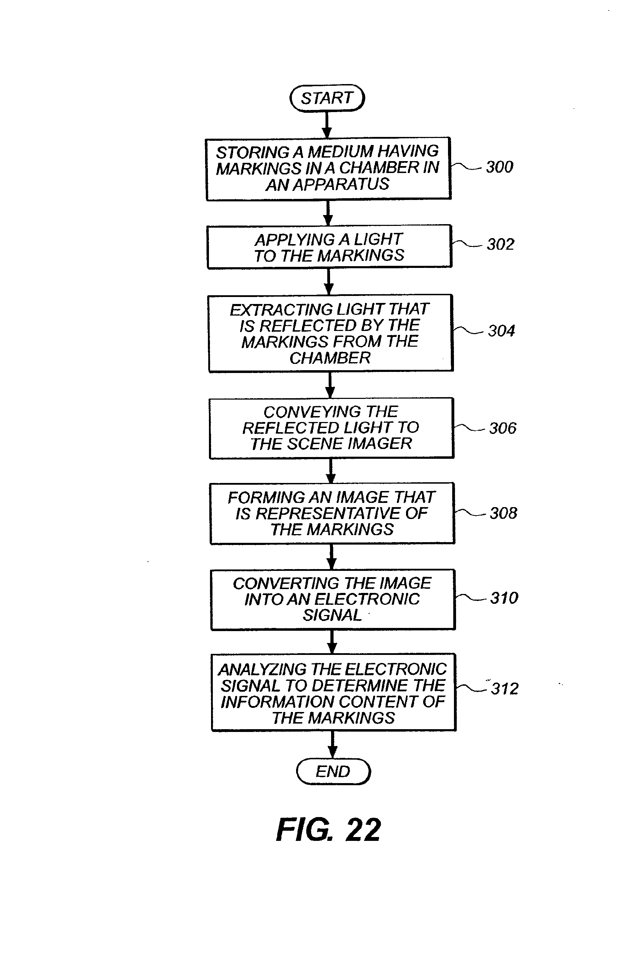

Fig. 22 shows a method in accordance with the present invention, for using a scene imager in an imaging apparatus to determine the information content of markings on a medium contained in a chamber of the apparatus. In accordance with this method a medium is stored in the chamber in the apparatus (step 300) a light is then applied to the markings (step 302) light that is reflected by the markings is then extracted from the chamber (step 304) reflective light is conveyed to the scene imager (step 306) and an image is formed on the imager that is representative of the markings (step 308).

The image on the imager is then converted into an electronic signal (step 310). This image is then analyzed to determine the information content of the markings. (step 312) The information content of the markings can be determined by analyzing patterns within the image so as to identify characters or machine code symbols. Further, certain hand written codes and signals can be interpreted. Finally, as noted above, a simple image of the markings can be captured and properly processed. Where a color image of the markings is obtained, a polychromatic light is provided on to the markings and processing can be performed to ensure color fidelity and focus with the image of the markings then used as metadata which travels with each image recorded on the medium so as to enable identification of the medium upon which the image is recorded.

In accordance with this method, this can be formed in an iterate manner in that an attempt can be made read machine readable bar codes, then failing this attempt, an attempt can be made to use character recognition to identify machine or man written characters on the markings, and, to the extent that no information can be obtained in this way, a simple image can be captured and processed to provide a visual indication of the appearance of the medium upon which the image is recorded.

## Claims

1. An imaging apparatus for recording images on a medium, the medium having an exterior surface with information recorded thereon in the form of optically detectable markings, the imaging apparatus comprising:
a body having a medium holding chamber for positioning the medium;
an electronic image capture system having:
an imager having an imaging area that converts light incident on the imaging area into an electronic signal;
a first optical path forming an image of the scene on at least a portion of the imaging area;
a light source providing light in the holding chamber to illuminate the markings;
a second optical path having a light entry area positioned in the medium holding chamber to receive light that is reflected by the markings, said second optical path conducting the reflected light from the entry area to an exit area of the second optical path, with said exit area positioned to direct light from the second optical path to form an image of the markings on at least a part of the imaging area; and
a controller capturing an electronic signal representative of the image of the markings; said controller adapted to analyze the electronic signal to determine the information encoded in the markings.

2. The imaging apparatus of claim 1, further comprising a shutter system selectively preventing light from at least one of the first optical path and second optical path from forming an image on the imager, wherein the controller causes the shutter system to permit light from only one of the first and second optical paths to reach the imager at a time.

3. The imaging apparatus of claim 1, wherein the first optical path forms an image on a first part of the image area and the second optical path forms an image on a second part of the image area.

4. An imaging apparatus for recording images on a medium, the medium having an exterior surface with information recorded thereon in the form of optically detectable markings, the imaging apparatus comprising:
a body having a medium holding chamber for positioning the medium;
an electronic image capture system having:
an imager having an imaging area that converts light incident on the imaging area into an electronic signal;
a lens system for focusing light from the scene onto at least a portion of the imaging area;
a selectably actuatable light source providing light in the holding chamber to illuminate the markings;
an optical path aligned with the markings and having a light entry area positioned to receive light that is reflected by the markings, said optical path conducting the reflected light from the entry area to an exit area of the optical path, with said exit area positioned to direct light from the light path to form an image on at least a part of the imaging area; and
a controller actuating the light source and capturing an electronic signal from the part of the imaging area on which the image is formed; said controller adapted to analyze the electronic signal to determine the information encoded in the markings.

5. The apparatus of claim 4 wherein the optical path comprises a multiplicity of individual optical fibers.

6. The apparatus of claim 5 wherein the multiplicity of optical fibers are arranged to form a coherent image of the markings on the imager and the imager determines the information encoded in the markings.

7. The apparatus of claim 5 wherein the multiplicity of optical fibers form a non-coherent image of the markings on the imager and the controller is adapted to determine the information content of the markings by analysis of the non-coherent image.

8. A camera for recording images on film and electronically, the film being housed in a container having an exterior surface with information recorded thereon in the form of optically detectable markings, the camera comprises:
a camera body having a film image capture system for capturing images of a scene on the film;
a film holding chamber for positioning the film container so that the film can be used by the film image capture system;
an electronic image capture system having an imager with an imaging area that converts light incident on the imaging area into an electronic signal and a lens system for focusing light from the scene onto at least a portion of the imaging area;
a selectively actuatable light source directing light onto the markings;
a set of optical fibers each having an entry area receiving light, an exit area for directing received light out of each fiber, and a pathway for conveying substantially all of the received light from each entry area to each exit area;
a chamber connector located in the film holding chamber and distributing the entry areas of the set of optical fibers to confront areas of the exterior surface of the film container having markings thereon;
an imaging locator positioning the exit areas so that light from the exit areas is projected onto at least part of the imaging area of the imager to form an image of the markings; and,
a controller activating the light source and causing an electronic signal representing the image of the markings onto the imaging area; said controller adapted to analyze the electronic signal to determine therefrom the information recorded in the markings.

9. A method of using a scene imager in a camera to determine the information content of markings on a medium contained in a chamber of the camera, the method comprising the steps of:
applying a light to the medium in an area confronting the markings;
extracting an image of the light reflected by the markings;
conveying the image of the light reflected by the markings to the imager;
forming an image on the imager representative of the markings;
converting the image formed on the imager into an electronic signal; and,
determining the information content of the markings based upon the analysis of the electronic signal.

10. The method of claim 9 wherein the image formed on the imager is not spatially coherent further comprising the step of determining an association between the image formed on the imager and the information contained in the markings and using the association for extract information from the images.
